# EUROPÄISCHE PATENTSCHRIFT

(11) **EP 4 118 948 B1**
(45) Veröffentlichungstag und Bekanntmachung des Hinweises auf die Patenterteilung: **09.04.2025**
(21) Anmeldenummer: 22183004.5
(22) Anmeldetag: 05.07.2022
(51) Int. Cl.: A01D 57/02, A01D 80/02

(54) **HASPEL FÜR EINE ERNTEMASCHINE**
REEL FOR A HARVESTER
RABATTEUR POUR MOISSONNEUSE

(30) Priorität: 14.07.2021 DE 202021103773 U
(43) Veröffentlichungstag der Anmeldung: 18.01.2023
(73) Patentinhaber: Mötzing, Gerd, 97647 Hausen-Roth in der Rhön (DE); AB. Agri-Broker e.K., 42699 Solingen (DE)
(72) Erfinder: Mötzing, Gerd, 97647 Hausen-Roth in der Rhön (DE); Wollesen, Jörg, 42699 Solingen (DE)
(74) Vertreter: RGTH

(56) Entgegenhaltungen:
- FR-A3- 2 811 196
- US-A1- 2014 223 876
- US-A1- 2015 089 916

## Beschreibung

Die Erfindung betrifft eine Haspel für eine Erntemaschine, insbesondere für einen Mähdrescher, mit mehreren Zinkenträgern, an denen Zinken zur Erntegutförderung befestigt sind, wobei die Zinkenträger von einem längsaxial geschlitzten Rohr umhüllt sind.

Solche Haspeln dienen dazu, stehendes Gut einem Messerbalken und einem Schneckenförderer einer Erntegutbergungseinrichtung zuzuführen.

In der EP 2 775 819 B1 wird eine Haspel mit einem zentralen Haspeltragrohr und an den Enden des Rohres angeordneten Tragsternen beschrieben, die aus einer ringförmigen Nabe bestehen, die koaxial auf den Außendurchmesser des Tragrohres geschoben ist, wobei Sternarme über parallel zum Tragrohr verlaufende Zinkenstangen miteinander verbinden. Die Zinkenstangen können einstückig sein oder aus einzelnen Segmenten bestehen.

Die DE 10 2004 028 550 A1 beschreibt eine Haspel mit sich über die Breite der Haspel erstreckenden Zinkenträgern, die Zinken zur Förderung von Erntegut tragen, und mit Streben zur Abstützung der Zinkenträger, die durch Strebenhalterungen am Zinkenträger befestigt sind. Diese Konstruktion, die ohne ein zentrales Tragrohr auskommt, soll eine leichte Haspel bereitstellen.

Förderzinken sowie ihre Befestigung an einem Zinkenträger gibt es in mehreren Ausführungen. Bei den meisten Haspelkonstruktionen werden als Zinkenträger zylindrische Rohre verwendet, an denen die Förderzinken mittels Schrauben oder durch Klemmverbindung befestigt sind, wie dies beispielsweise in der DE 40 28 885 A1 oder der DD 27456 dargestellt ist. Verwendet man Doppel- oder Einfachzinken aus Federstahl, und befestigt diese durch Schrauben mit dem Tragbalken, befinden sich freiliegende spiralförmige Federwindungen unmittelbar am Tragbalken, wodurch unter ungünstigen Erntebedingungen in diesem Bereich häufig Umwicklungen von Erntegut auftreten, die in aufwendiger Handarbeit beseitigt werden müssen. Auch bei Einfachstahlfederzinken, deren Federwindungen den Außenumfang der Tragbalken umschließen und die über eine Schraub- oder Bolzenverbindung am Tragbalken befestigt sind, besteht die Gefahr, dass sich dort Erntegut aufwickelt und festsetzt.

Aus der DE 198 58 452 A1 sind Haspeln bekannt, bei der die Tragbalken mit einer oder mehreren Längsnuten versehen sind, in welche Arretierungen der Doppelfederzinken eingreifen und deren Lage am Tragbalken sichern. Zusätzlich können die Zinken durch ein mittig angebrachtes Klemmstück gesichert werden. Auch bei dieser Ausführungsform sind die Federwindungen der Zinken am Tragbalken angeordnet und bilden Ansatzpunkte für Umwicklungen mit dem Erntegut. Um diese Gefahr zu minimieren kann zwar ein zusätzliches Abdeckblech verwendet werden, das mit Klemmschrauben am Tragbalken befestigt ist, jedoch ist diese spezielle Variante nur für Doppelfederzinken aus Stahl anwendbar und im Übrigen auch aufwendig in der Montage.

In der EP 1 397 953 B1 wird daher eine Haspel mit einem Tragbalken vorgeschlagen, der aus einem schalenförmig profilierten Träger mit Ebenen und/oder gekrümmten Oberflächen und mit ungleichförmigem Querschnitt besteht, wobei der Tragbalken einen Bereich aufweist, der die Federwindungen bzw. das obere Teilstück der Förderzinken formgleich zumindest teilweise umgreift. Der Tragbalken besteht aus einem rohrförmigen Hohlprofil, wobei das Profil, in Fahrtrichtung der Erntemaschine gesehen, im vorderen und oberen Bereich einen nach außen geformte Oberfläche und im rückwärtigen Bereich eine nach innen gewölbte Anlage- und Abdeckfläche sowie im unteren Bereich eine ebene Befestigungsfläche für die Förderzinken aufweist. Durch diese Konstruktion sollen die spiralförmigen Federwindungen der Förderzinken von den Tragbalkenteilen zum größten Teil abgedeckt werden, um einen Kontakt mit dem Erntegut weitgehend auszuschließen. Allerdings ist neben der baulich aufwendigen Konstruktion auch hier die Aufwickelgefahr nicht vollständig zu verhindern.

Dies gilt auch für die konstruktiv aufwendigen in der DE 41 06 723 C2 beschriebenen Halmabweiser.

Gattungsgemäße Haspeln sind ferner aus US 2015/0089916 A1 und US 2014/0223876 A1 bekannt, worin jeweils geschlitzte Rohre zur formschlüssigen Aufnahme von Zinkenträgern offenbart sind.

Schließlich offenbart FR 2811196 A3 eine Haspel mit einem Rohr, das im zusammengesetzten Zustand Ausnehmungen zur Durchführung von Zinken eines Zinkenträgers besitzt.

Es ist Aufgabe der vorliegenden Erfindung, eine Haspel der eingangs genannten Art zu schaffen, bei der die Aufwickelgefahr mit Halmgut weitestgehend ausgeschlossen ist und bei der die Lösung konstruktiv einfach und preiswert ist.

Diese Aufgabe wird durch die Haspel nach Anspruch 1 gelöst, die dadurch gekennzeichnet ist, die Zinken aus dem Längsschlitz des Rohres herausragen, wobei der Längsschlitz des Rohres ein Breitenmaß aufweist, das kleiner ist als der Durchmesser der Zinken und dass der Längsschlitz jeweils gegenüberliegende halbkreisförmige Ausnehmungen aufweist, durch welche die Zinken herausragen. Solche längsgeschlitzten Rohre können auch zum Nachrüsten von Trägerrohren bei Haspeln verwendet werden. Die Schlitzbreite des Rohres wird so gewählt, dass die Zinken herausragen können und auch ein für deren Federwirkung notwendiger Spielraum vorhanden ist.

Der Längsschlitz des Rohres weist ein Breitenmaß auf, das kleiner ist als der Durchmesser der Zinken, wobei der Längsschlitz jeweils gegenüberliegende halbkreisförmige Ausnehmungen aufweist, durch welche die Zinken herausragen. Anders ausgedrückt, die beiden Halbkreise bilden Bohrungen, die eine Durchführung der Zinken mit einem Spiel ermöglicht. Während der Drehung der Haspel sind die Zinken innerhalb dieser Bohrungen bzw. halbkreisförmigen Ausnehmungen frei in ihrer längsaxialen Richtung beweglich.

Vorzugsweise besteht das geschlitzte Rohre aus Aluminium, was den Vorteil hat, dass der Schutz gegen ein Aufwickeln des Erntegutes keine schweren Bauteile erfordert. Dies ist insofern von Bedeutung, weil Haspeln zum Teil eine sehr große Breite haben können, was bei schweren Anbauteilen dazu führen kann, dass die Zinkenträger durchhängen.

Nach einer weiteren Ausgestaltung der Erfindung ist der Außendurchmesser des geschlitzten Rohres mindestens 8 cm, vorzugsweise mindestens 10 cm, wobei der Außendurchmesser des rohrförmigen Zinkenträgers ≤ 3 cm ist.

Ferner ist nach einer weiteren Ausgestaltung der Erfindung der Zinkenträger rohrförmig ausgebildet und besitzt einen Außendurchmesser, der kleiner ist als der Innendurchmesser der um den Zinkenträger angeordneten Spiralwicklung der Federzinken. Die den Federmechanismus bildende Spiralwicklung der Federzinken ist somit nicht neben dem Zinkenträger, sondern um den Zinkenträger herum angeordnet, wobei das Ende der Spiralwicklung durch eine Schraubverbindung an den rohrförmigen Zinkenträger befestigt ist.

Die geschlitzten Rohre können nach einer Aufspreizung als Wickelschutz über vorhandene Zinkenträgerrohre und Zinken geschoben werden. Diese geschlitzten Rohre bieten den Vorteil, dass verlustarm gemäht werden kann, weil in wirksamer Weise verhindert wird, dass Erntegut von der sich drehenden Haspel nach oben gefördert und vor dem Schneidwerk auf dem Boden fällt. Durch Verwendung der geschlitzten Rohre wird der Gutfluss erheblich verbessert. Selbst Unkräuter wie Kamille, Klette oder ähnliches führen nicht zu Aufwicklungen, da die Federwindungen der Zinken komplett durch das geschlitzte Rohr abgedeckt sind. Schließlich wird der Gutfluss, insbesondere bei magerer Sommergerste dadurch verbessert, dass das geschlitzte Rohr das Gut näher an den Mähbalken führt. Ein weiterer Effekt der geschlitzten Rohre liegt darin, dass, beispielsweise beim Rapsdreschen eine Schotenbeschädigung oder ein Platzen der Schoten im Mähdreschervorbau verhindert wird.

Ein Ausführungsbeispiel der vorliegenden Erfindung ist in den Zeichnungen dargestellt. Es zeigen:

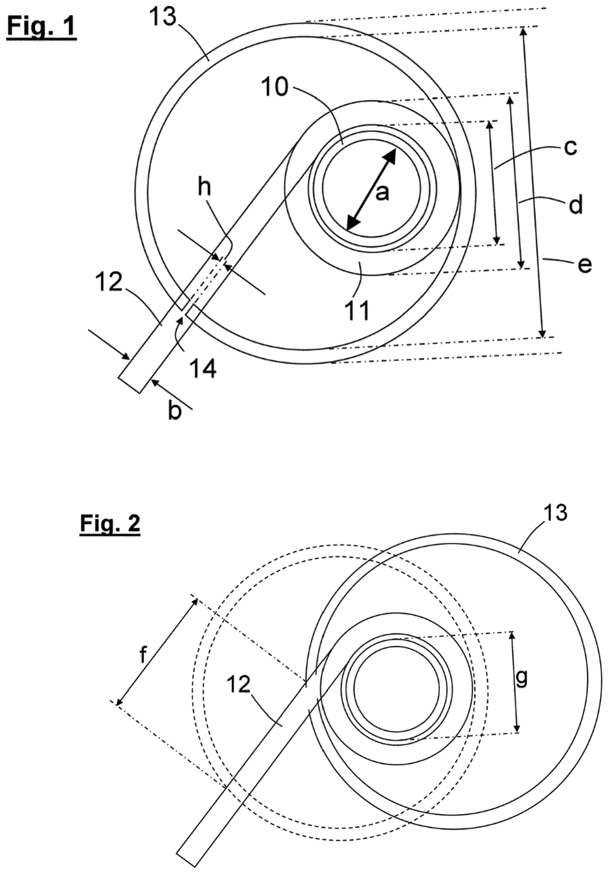

- Fig. 1, 2: zwei Querschnittsansichten mit unterschiedlichen Lagen eines Zinkenträgers zum geschlitzten Rohr.

Mähdrescher sowie Haspeln sind im Prinzip nach dem Stand der Technik bekannt, wobei eine Haspel mehrere Zinkenträger aus kreiszylindrischen Rohren mit einem über ihre Länge konstanten Außenquerschnitt besitzt, die beispielsweise an Tragarmen oder sonstigen Halterungen befestigt sind.

In Fig. 1 ist ein rohförmiger Zinkenträger 10 mit einem Innendurchmesser a von beispielsweise 22 mm zu erkennen. Die Rohrwanddicke beträgt beispielsweise 6 mm, woraus sich ein Außendurchmesser g von 28 mm ergibt. Um den rohrförmigen Zinkenträger 10 erstreckt sich die Spiralwicklung 11, die in einer Federzinke 12 endet, die tangential von der Federwicklung absteht. Die dargestellte Zinke 12 besitzt einen Durchmesser von 6 mm. Hieraus ergeben sich die Maße c=30 mm, d=42 mm und e=81 mm.

Erfindungsgemäß erstreckt sich um den Zinkenträger und die Spiralwicklung ein Rohr 13 mit einem Längsschlitz 14 einer Breite h von 2 mm. Da der Durchmesser der Zinken mit 6 mm größer ist als die Schlitzbreite, besitzt der Schlitz jeweils in äquidistanten Abständen halbkreisförmige Ausnehmungen an gegenüberliegenden Seiten des Schlitzes, welche eine Bohrung bilden, durch die die Zinken 12 mit einem entsprechenden Spiel hindurchgeführt sind und sich wie aus Fig. 2 ersichtlich in unterschiedliche Lagen bringen lassen. Die Position nach Fig. 1 ist in Fig. 2 strichliniert dargestellt, während die durchgezogene Kreiskontur des geschlitzten Rohres 13 eine relative Lage zum Zinkenträger bzw. der Spiralwicklung der Federzinken hat, bei der der Federzinken 12 um ein Maß f von mehr als 30 mm weiter herausragt. Mit anderen Worten, das geschlitzte Rohr kann gegenüber dem Zinkenträger mit der diesen umhüllenden Spiralwicklung eine Rollbewegung ausführen, bei der der Zinken 12 längsaxial weiter oder kürzer durch die halbkreisförmigen Ausnehmungen bzw. Bohrungen geführt wird.

## Patentansprüche

1. Haspel für eine Erntemaschine, insbesondere für einen Mähdrescher, mit mehreren Zinkenträgern (10), an denen Zinken (12) zur Erntegutförderung befestigt sind, wobei die Zinkenträger (10) von einem längsaxial geschlitzten Rohr (13) umhüllt sind, wobei die Zinken (12) aus dem Längsschlitz des Rohres (13) herausragen, wobei der Längsschlitz (14) des Rohres (13) ein Breitenmaß aufweist, das kleiner ist als der Durchmesser der Zinken (12), **dadurch gekennzeichnet, dass** der Längsschlitz (14) jeweils gegenüberliegende halbkreisförmige Ausnehmungen aufweist, durch welche die Zinken (12) herausragen.

2. Haspel nach Anspruch 1, **dadurch gekennzeichnet, dass** das geschlitzte Rohr aus Aluminium besteht.

3. Haspel nach Anspruch 1 oder 2, **dadurch gekennzeichnet, dass** der Zinkenträger (10) rohrförmig ist, dass der Außendurchmesser des geschlitzten Rohres (13) mindestens 8 cm, vorzugsweise mindestens 10 cm, beträgt und dass der Außendurchmesser des rohrförmigen Zinkenträgers (10) kleiner als 3 cm ist.

4. Haspel nach einem der Ansprüche 1 bis 3, **dadurch gekennzeichnet, dass** der Zinkenträger rohrförmig ist und einen Außendurchmesser besitzt, der kleiner ist als der Innendurchmesser der um den Zinkenträger (10) angeordneten Spiralwicklung (11) der Federzinken.

## Claims

1. Reel for a harvesting machine, in particular for a combine harvester, with a plurality of tine carriers (10) to which tines (12) for conveying the crop are fastened, wherein the tine carriers (10) are encased by a longitudinally axially slotted tube (13),
wherein the tines (12) protrude from the longitudinal slot of the tube (13), wherein the longitudinal slot (14) of the tube (13) has a width dimension which is smaller than the diameter of the tines (12), **characterized in that** the longitudinal slot (14) has respectively opposite semicircular recesses through which the tines (12) protrude.

2. Reel according to claim 1, **characterized in that** the slotted tube is made of aluminium.

3. Reel according to claim 1 or 2, **characterized in that** the tine carrier (10) is tubular, **in that** the outer diameter of the slotted tube (13) is at least 8 cm, preferably at least 10 cm, and **in that** the outer diameter of the tubular tine carrier (10) is less than 3 cm.

4. Reel according to one of claims 1 to 3, **characterized in that** the tine carrier is tubular and possesses an outer diameter which is smaller than the inner diameter of the spiral winding (11) of the spring tines arranged around the tine carrier (10).

## Revendications

1. Dévidoir pour une machine de récolte, en particulier pour une moissonneuse-batteuse, comportant plusieurs supports de dents (10) sur lesquels sont fixées des dents (12) pour le transport du produit récolté, les supports de dents (10) étant enveloppés par un tube (13) fendu dans le sens de l'axe longitudinal, les dents (12) dépassant de la fente longitudinale du tube (13), la fente longitudinale (14) du tube (13) présentant une dimension en largeur qui est inférieure au diamètre des dents (12), **caractérisé en ce que** la fente longitudinale (14) présente des évidements semi-circulaires respectivement opposés, à travers lesquels les dents (12) dépassent.

2. Dévidoir selon la revendication 1, **caractérisé en ce que** le tube fendu est en aluminium.

3. Dévidoir selon la revendication 1 ou 2, **caractérisé en ce que** le support de dents (10) est tubulaire, **en ce que** le diamètre extérieur du tube fendu (13) est d'au moins 8 cm, de préférence d'au moins 10 cm, et **en ce que** le diamètre extérieur du support de dents tubulaire (10) est inférieur à 3 cm.

4. Dévidoir selon l'une des revendications 1 à 3, **caractérisé en ce que** le support de dents est tubulaire et possède un diamètre extérieur inférieur au diamètre intérieur de l'enroulement en spirale (11) des dents élastiques disposé autour du support de dents (10).
